# EUROPÄISCHE PATENTSCHRIFT

(11) **EP 1 568 480 B1**
(45) Veröffentlichungstag und Bekanntmachung des Hinweises auf die Patenterteilung: **22.12.2010**
(21) Anmeldenummer: 04030542.7
(22) Anmeldetag: 23.12.2004
(51) Int. Cl.: B30B 11/00, G01N 21/35, G01N 21/64

(54) **Verfahren und Vorrichtung zur Qualitätsüberwachung bei der Herstellung von Tabletten**
Method and device for quality control in the preparation of tablets
Méthode et dispositif pour le contrôle de qualité dans la fabrication de comprimés

(30) Priorität: 20.02.2004 DE 102004008321
(43) Veröffentlichungstag der Anmeldung: 31.08.2005
(73) Patentinhaber: Fette GmbH, 21493 Schwarzenbek (DE)
(72) Erfinder: Hinzpeter, Jürgen, 21493 Schwarzenbeck (DE); Schmidt, Ingo, 21493 Schwarzenbeck (DE); Gathmann, Ulrich, 22147 Hamburg (DE); Gaedecke, Jörg, 21502 Geesthacht (DE); Seifert, Werner, 21465 Wentorf (DE)
(74) Vertreter: Hauck Patent- und Rechtsanwälte

(56) Entgegenhaltungen:
- US-A1- 2003 042 639
- LAI, C-K, ET AL: "Nondestructive and on-line monitoring of tablets using light-induced fluorescence technology" PHARMASCITECH, [Online] 2003, XP002335117 AAPS Gefunden im Internet: URL:http://www.aapspharmscitech.org/articl es/pt0501/pt050103/pt050103.pdf> [gefunden am 2005-06-06]
- LAI, C-K AND COONEY, CC: "Application of a fluorescence sensor for miniscule on-line monitoring of powder mixing kinetics" JOURNAL OF PHARMACEUTICAL SCIENCES, Bd. 93, Nr. 1, 2003, Seiten 60-70, XP002335118
- BRUKER OPTICS: "Opticsnews, v 4.1.2003" INTERNET ARTICLE, [Online] 2003, XP002335119 Gefunden im Internet: URL:http://www.brukeroptics.de/downloads/o pticsnews_vol4_1-2003.pdf> [gefunden am 2005-07-06]

## Beschreibung

Die Erfindung bezieht sich auf ein Verfahren zur Qualitätsüberwachung bei der Herstellung von Tabletten in einer Rundläufertablettenpresse nach dem Patentanspruch 1.

Rundläufertablettenpressen sind allgemein bekannt und werden vielfältig in der pharmazeutischen Industrie eingesetzt. Sie weisen einen Rotor auf, der zumeist um eine vertikale Drehachse angetrieben ist und Ober- und Unterstempel, Matrizen, Matrizenscheibe und Kurvensysteme sowie mindestens eine Druckstation aufweist. Bei drehendem Rotor sorgt das Kurvensystem für die vertikale Positionierung von Ober- und Unterstempel am Teilkreis. Die Befüllung der Matrizen mit pulverförmigem Pressmaterial erfolgt mit Hilfe geeigneter Füllsysteme, beispielsweise einer Rührflügeleinrichtung oder einem Füllschuh, mit welchem die Matrizen kontinuierlich bei drehendem Rotor befüllt werden. Am Teilkreis des Rotors befinden sich ausserdem Vor- und Hauptdruckrollen mit deren Hilfe das Pressmaterial zu einer Tablette verpresst wird. Das Auswerfen der Tabletten aus den Matrizen erfolgt mit Hilfe des zugehörigen Unterstempels, der von einer Auswerferkurve betätigt wird.

Die Tabletten müssen Qualitätskriterien genügen. Hierunter fallen z. B. Gewicht, Härte, Bruchfestigkeit, Tablettenhöhe, Wirkstoffgehalt, Wirkstofffreigabe, Zerfall, Friabilität, Porosität, Oberfläche, Feuchtegehalt usw. Es ist bekannt, eine Qualitätsüberwachung in der Weise durchzuführen, dass aus der Tablettenproduktion Stichproben entnommen werden. Sie werden im Labor mit geeigneten Prüfgeräten geprüft. Nachteilig hierbei ist, dass naturgemäß nur ein Bruchteil der produzierten Tabletten geprüft wird. Der manuelle Aufwand und auch der Zeitaufwand sind groß.

Bis zur Einleitung von möglichen Prozesskorrekturen vergeht eine längere Zeit. Messungen des quantitativen Anteils von Wirk- und Zusatzstoffen dauern mit konventionellen Messverfahren (HPLC-Verfahren) Stunden bis Tage.

Es ist auch bereits bekannt, eine sogenannte Online-Prozesskontrolle durchzuführen. Ein geeignetes Prüfgerät wird unmittelbar neben der Tablettiermaschine aufgestellt. Stichproben werden automatisch aus dem Tablettenstrom entnommen, dem Prüfgerät zugeführt, vereinzelt und gemessen. Hierbei kann ein Eingriff in den Prozess automatisch erfolgen über eine Rechnerschnittstelle vom Prüfgerät zu einem Maschinenrechner. Mit Hilfe dieses Verfahrens, das ebenfalls nur ein Bruchteil der produzierten Tabletten prüft, können nur wenige Qualitätsparameter überprüft werden, wie z. B. Gewicht, Bruchfestigkeit und Höhe. Ein weiteres bekanntes Verfahren nutzt die Messung der Presskraft bei jeder einzelnen Tablette in der Tablettenpresse, um Qualitätskriterien zu prüfen. Bekanntlich ist die Presskraft ein Maß für die Bruchneigung das Tablettengewicht und die Tablettenhärte. Hierbei ist eine Kontrolle jeder produzierten Tablette möglich. Nachteilig ist jedoch, dass hierdurch ein indirektes Messverfahren angewendet wird, welches nicht die volle Akzeptanz in den Herstellungsvorschriften der Pharmaindustrie hat. Wichtige Qualitätsparameter, wie z. B. Wirkstoffidentität, Wirkstoffgehalt, Zerfall, Porosität, Gehalt an Zusatzstoffen usw. werden nicht erfasst.

Aus DE 19502596 A1 ist ein Verfahren zur Erstellung eines Kraft-Weg-Diagramms der Pressstempel einer Rundläufer-Tablettenpresse bekannt. Dabei wird mittels an den Druckrollen der Presse angeordneten Kraftmessdosen die Presskraft der Pressstempel gemessen.

Aus Lai et al.: Nondestructive and On-line Monitoring of Tablets Using Light-Induced Fluorescence Technology, AAPS PharmSciTech 2004; 5(1) ist der Einsatz von LIF-Sensoren zur Qualitätsüberwachung von Tabletten bekannt. Dabei ist beschrieben, dass in einer Tablettenpresse produzierte Tabletten mittels eines Linearförderers oder einer externen Tablettenanalysescheibe an dem LIF-Sensor vorbeigeführt und so zerstörungsfrei überprüft werden können.

Der Erfindung liegt die Aufgabe zugrunde, ein Verfahren zur Qualitätsüberwachung bei der Herstellung von Tabletten in einer Rundläufertablettenpresse anzugeben, das Online arbeitet, alle Tabletten prüfen kann und die Erfassung einer Vielzahl von wichtigen Qualitätsparametern ermöglicht, ohne die Tabletten zerstören zu müssen.

Diese Aufgabe wird durch die Merkmale der Patentanprüche 1 und 7 gelöst.

Bei dem erfindungsgemäßen Verfahren werden, nachdem die Oberstempel die Matrizen verlassen haben zumindest einige chemische und/oder mechanische Eigenschaftsdaten der Tabletten mit Hilfe mindestens eines Nah-Infrarotsensors oder eines Laser-Fluoreszenzsensors im Pressraum gewonnen, wobei der NIR-oder LIF-Sensor oberhalb der Matrizenscheibe und oberhalb des Teilkreises der Matrizen stationär angeordnet ist und eine zu prüfende Tablette sich noch innerhalb der Matrize befindet, und wobei die Daten gewonnen werden nachdem ein Messvorgang von einem Maschinenrechner in Abhängigkeit von von einem Positionsgeber ermittelter Matrizenposition relativ zum Nah-Infrarot- oder Laser-Fluoreszenzsensor ausgelöst worden ist. Die sogenannte Nah-Infrarotspektroskopie (NIR) oder die Laser-Fluoreszenzspektroskopie (LIF) ist eine an sich bekannte Messmethode zur Bestimmung von Eigenschaften von pharmazeutischen Stoffen, auch von Tabletten. Für die Anwendung bedarf es einer Licht- bzw. Strahlungsquelle und eines Empfängers, der aus dem vorhandenen Licht bzw. seinem Spektrum die erwünschten Daten aufnimmt und übermittelt.

Bei dem erfindungsgemäßen Verfahren wird mit Hilfe von NIR- oder LIF-Sensoren innerhalb des Pressraums eine Messung vorgenommen, wobei sie, den einzelnen Tabletten bzw. ihrer Position zugeordnet, zu dem Zeitpunkt erfolgt, nachdem die Stempel der Presse die Tablette gepresst haben und der Oberstempel die Matrize verlassen hat. Die Tablette muß jedoch noch relativ zur Matrizenscheibe ortsfest sein und darf sich noch nicht lose auf der Oberfläche der Matrizenscheibe befinden. In diesem Bereich kann der Sensor z. B. die Stirnfläche und auch einen Teil der Mantelfläche der Tablette erfassen. Der Messvorgang findet entweder nach der Reflexions- oder der Transmissionsmethode statt. Die Transmissionsmethode kommt dann nicht mehr zur Anwendung, wenn die Tablette zu dick bzw. einen zu großen Durchmesser hat. Wie schon erwähnt, wird der Messvorgang durch den Maschinenrechner ausgelöst, der ohnehin zum Betrieb der Rundläufertablettenpresse vorhanden ist.

Mit einem etwa an der Rotorwelle angeordneten Impulsgeber kann auf kleinste Winkelgrade genau die Position der Matrize am Umfang bestimmt werden und somit auch die Position jeder Matrize im Hinblick auf den Sensor. Die Messwerte jeder einzelnen Tablette, d. h. deren Frequenzspektren werden von dem Maschinenrechner oder einem Zusatzrechner, der mit dem Sensor verbunden ist, aufgenommen und nach bekannten Verfahren, wie z. B. der Chemometrie, ausgewertet werden. Die Messergebnisse über die mechanischen und/oder chemischen Eigenschaften der Tablette, wie z. B. Wirkstoffidentität und/oder Wirkstoffgehalt und/oder Gehalt von Zusatzstoffen und/oder Dichte und/oder Härte und/oder Bruchfestigkeit und/oder Porosität und/oder anderen relevanten messbaren Qualitätsparametern werden dazu verwendet, statistische Berechnungen, wie z. B. Mittelwerte und/oder Standardabweichungen, durchzuführen und/oder anzuzeigen und/oder zu protokollieren und/oder bei Grenzbereichsüberschreitungen die Tablettenpresse zu stoppen. Die statistischen Berechnungen können außerdem dazu benutzt werden, Sollwertabweichungen der Qualitätsdaten dazu zu benutzen, Regelkeise zu aktivieren, die zur Prozessoptimierung innerhalb der Maschine beitragen. Z. B. können Sollwertabweichungen der Qualitätsdaten wie z. B. auf Wirkstoffgehalt und/oder Dichte und/oder Härte und/oder Bruchfestigkeit und/oder Porosität dazu benutzt werden, Optimierungen von Maschineneinstellparametern, wie z. B. Drehzahl des Rotors und/oder Drehzahl des Füllsystems und/oder Fülltiefe und/oder Tablettensteghöhe und/oder Maß der Eintauchtiefe durchzuführen.

Nach einer Ausgestaltung der Erfindung wird das pulverförmige Pressmaterial schon vor seiner Verpressung hinsichtlich qualitätsrelevanter Parameter, wie z. B. Wirkstoffidentität und Wirkstoffgehalt und/oder Gehalt von Zusatzstoffen und/oder Feuchtegehalt und/oder Temperatur überwacht. Bei Sollwertabweichungen können diese angezeigt werden. Bei Verlassen von Grenzbereichen kann die Tablettenpresse gestoppt werden. Für diesen Fall können Sensoren am Fülltrichter, am Füllrohr oder am Füllsystem (Füllschuh) selbst angebracht werden. Die auf den Maschinenrechner bzw. den Zusatzrechner gegebenen Messergebnisse können entweder angezeigt und/oder protokolliert und/oder bei Überschreiten eines vorgegebenen Grenzbereiches zu einem Stoppen der Maschine führen. Außerdem können sie statistisch verarbeitet und/oder zum Regeln der Tablettenpresse benutzt werden.

Die Erfindung ermöglicht gegenüber den bisher bekannten Qualitätskontrollverfahren eine schnelle und zerstörungsfreie Messmethode. Es kann jede einzelne Tablette geprüft werden. Es ist aber auch möglich, einen Teil der Tabletten zu kontrollieren. Da die Messergebnisse umgehend vorliegen, ist eine schnelle Prozessoptimierung mit Hilfe geeigneter Regelkreise möglich. Ein weiterer Vorteil ist, dass eine unmittelbare Freigabe des produzierten Batches möglich ist. Bei herkömmlichen Verfahren liegt ein mehr oder weniger großer Zwischenraum zwischen der Herstellung und der Freigabe eines Batches. Die Erfindung ermöglicht eine frühzeitige Unterbrechung des Produktionsprozesses bei Grenzbereichsverletzungen der Qualitätsparameter oder Freigabe eines Batches. Insgesamt wird die Prozeßsicherheit verbessert bei gleichzeitiger Verringerung der Prozeßkosten. Es versteht sich, dass neben dem erfindungsgemäßen Verfahren auch eine herkömmliche Probenmessung erfolgen kann, welche im Hinblick auf einzelne Parameter zu präzisen Ergebnissen führt.

Die Erfindung wird nachfolgend anhand von Zeichnungen näher erläutert.
- Figur 1: zeigt eine Schaltungsanordnung einer Vorrichtung zur Durchführung des erfindungsgemäßen Verfahrens.
- Figur 2: zeigt eine Einzelheit einer Rundläufertablettenpresse in einer Vorrichtung der Erfindung.

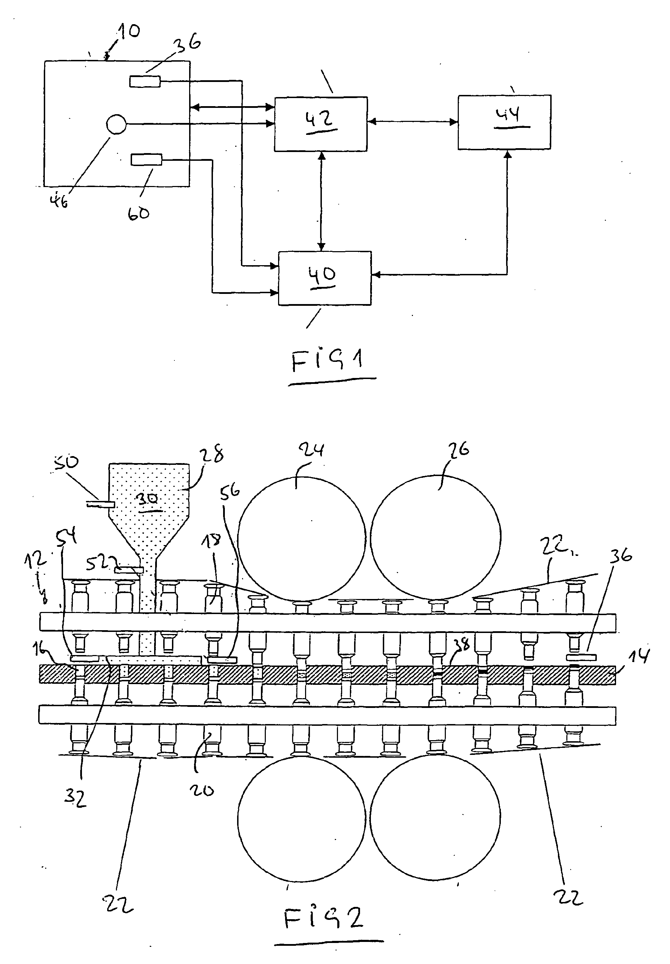

In Figur 1 ist beispielsweise allgemein eine Rundläufertablettiermaschine dargestellt, d. h., der Pressraum dieser Maschine, von der Einzelheiten noch anhand von Figur 2 kurz beschrieben werden sollen. In Figur 2 ist ein Teil eines Rotors 12 angedeutet, der um eine vertikale Achse drehend angetrieben ist (nicht gezeigt). Der Rotor weist eine Matrizenscheibe 14 auf mit einzelnen Matrizen 16, denen jeweils ein Paar Pressstempel zugeordnet ist, nämlich ein Oberstempel 18 und ein Unterstempel 20. Die Pressstempel 18, 20 wirken mit stationären Kurvenelementen 22 zusammen, welche die Position der Stempel bei ihrer Drehung mit dem Rotor 12 jeweils vorgeben. In Figur 2 ist ein Paar Vordruckrollen 24 und ein Paar Hauptdruckrollen 26 dargestellt. Die Druckrollenpaare 24, 26 führen mit Hilfe der zwischenlaufenden Pressstempel die Verpressung des Pulvermaterials durch, wie dies an sich bekannt ist. Für die Zuführung des Pulvermaterials dient ein Fülltrichter 28, der Pulvermaterial 30 in einen Füllschuh 32 gibt. Dieser füllt die einzelnen Matrizen nacheinander mit einer vorgegebenen Füllmenge an Pulver, wobei die Füllmenge durch die Position der Unterstempel 20 in den Matrizen 16 bestimmt wird. Auch dies ist an sich bekannt.

In Figur 2 ist ferner ein NIR- oder LIF-Sensor 36 zu erkennen, der oberhalb der Matrizenscheibe 14 und oberhalb des Teilkreises der Matrizen 16 stationär angeordnet ist. Der Anbringungsort des Sensors 36 ist derart, dass der jeweilige Oberstempel sich bereits ausreichend weit aus der Matrize 16 herausbewegt hat, so dass ausreichend Platz für den Sensor 36 vorhanden ist. Andererseits befindet sich eine zuvor gepresste Tablette 38 noch innerhalb der Matrize, hat daher noch eine vorgegebene Position.

Wie bereits weiter vom erläutert, ist es mit Hilfe eines derartigen Sensors möglich, der nach einem an sich bekannten Verfahren arbeitet, eine große Reihe von Qualitätskriterien für die Tablette zu prüfen.

In Figur 1 ist der Sensor 36 dargestellt. Er befindet sich im Pressraum der Tablettenpresse 10, in dem sich auch die in Figur 2 gezeigten Teile befinden. Der Sensor 36 ist mit einem Rechner 40 verbunden, der seinerseits mit einem Maschinenrechner 42 für die Tablettenpresse zusammenarbeitet. Ein derartiger Maschinenrechner ist bei Tablettenpressen für die Steuerung und Regelung des Betriebes bekannt. Der Maschinenrechner 42 kooperiert mit einem Bedienrechner 44, der auch mit dem Zusatzrechner 40 verbunden ist. Der Welle des Rotors (nicht gezeigt) ist ein Impulsgeber 46 zugeordnet, dessen Signale auf den Maschinenrechner 42 gegeben werden. Der Impulsgeber 46 ist etwa ein bekannter Winkelencoder, der in kleinsten Winkelschritten ein entsprechendes Signal auf den Maschinenrechner 42 gibt für die Bestimmung der Position der einzelnen Matrizen 16 des Rotors 12 (Figur 2). Die vom Sensor 36 ermittelten Daten werden im Zusatzrechner 40 ausgewertet und in den Maschinenrechner 42 gegeben für die Zuordnung zu den einzelnen Tabletten, die in den jeweiligen Matrizen gepresst worden sind. Umgekehrt löst der Maschinenrechner 42 einen Auswertevorgang positionsabhängig im Zusatzrechner 40 aus. Die Anzeige bestimmter ermittelter Daten erfolgt in dem Bedienrechner 44.

Wie in Figur 2 zu erkennen, sind weitere Sensoren der Tablettenpresse zugeordnet. Ein Sensor 50 ist dem Fülltrichter 28 zugeordnet, ein anderer Sensor 52 dem Füllrohr vom Trichter 28 zum Füllschuh 32. Dem Füllschuh 32 ist ein Sensor 54 zugeordnet. Ein vierter Sensor 50 befindet sich unmittelbar im Anschluss an den Füllschuh 32. Jeder der Sensoren 50 bis 56, die wiederum NIR- oder LIF-Sensoren sind, ermöglicht eine Kontrolle des pulverförmigen Pressmaterials 30 in der bereits beschriebenen Art und Weise.

In Figur 1 sind die Sensoren 50 bis 56 aus Vereinfachungsgründen zum Sensor 60 zusammengefasst. Wie zu erkennen, ist der Sensor 60 ebenfalls mit dem Zusatzrechner zwecks Auswertung verbunden.

Es versteht sich, daß eine beliebige Kombination der gezeigten Sensoren umgesetzt werden kann. Außerdem kann eine beliebige Kombination mit herkömmlichen Messungen kombiniert werden.

## Patentansprüche

1. Verfahren zur Qualitätsüberwachung bei der Herstellung von Tabletten in einer Rundläufertablettenpresse, die in einem Pressraum einen Rotor (12) mit Ober- und Unterstempeln (18, 20), Matrizenscheibe (14), Kurvensysteme für die Stempel (18, 20), mindestens eine Druckstation und ein Füllsystem für das pulverförmige Pressmaterial aufweist, bei dem die Tabletten auf chemische und/oder mechanische Eigenschaften geprüft werden,
**dadurch gekennzeichnet,**
**dass** nachdem die Oberstempel (18) die Matrizen (16) verlassen haben zumindest einige chemische und/oder mechanische Daten der Tabletten mit Hilfe eines NIR- oder LIF-Sensors (36) im Pressraum gewonnen werden, wobei der NIR-oder LIF-Sensor (36) oberhalb der Matrizenscheibe (14) und oberhalb des Teilkreises der Matrizen (16) stationär angeordnet ist und eine zu prüfende Tablette (38) sich noch innerhalb der Matrize (16) befindet, und wobei die Daten gewonnen werden nachdem ein Meßvorgang von einem Maschinenrechner in Abhängigkeit von einem Positionsgeber (46) ermittelten Matrizenpositionen relativ zum NIR- oder LIF- Sensor (36) ausgelöst worden ist.

2. Verfahren nach Anspruch 1, **dadurch gekennzeichnet, dass** mit Hilfe eines weiteren NIR- oder LIF-Sensors (50, 52, 54, 56) Eigenschaften des pulverförmigen Pressmaterials innerhalb des Pressraums geprüft werden.

3. Verfahren nach Anspruch 2, **dadurch gekennzeichnet, dass** das pulverförmige Pressmaterial in einer Zuführung zum Füllsystem, innerhalb des Füllsystems und/oder in einer Matrize (16) geprüft wird.

4. Verfahren nach einem der Ansprüche 1 bis 3, **dadurch gekennzeichnet, dass** aus den Daten der geprüften Eigenschaften Mittelwerte oder Standardabweichungen berechnet werden.

5. Verfahren nach einem der Ansprüche 1 bis 4, **dadurch gekennzeichnet, dass** bei Überschreiten von Grenzwerten bzw. Grenzbereichen die Tablettenpresse angehalten wird.

6. Verfahren nach einem der Ansprüche 1 bis 4, **dadurch gekennzeichnet, dass** bei Sollwertabweichungen der ermittelten Daten Regelkreise für einzelne Funktionen der Tablettenpresse angesteuert werden, um den Produktionsprozeß zu optimieren.

7. Rundläufertablettenpresse, bei der in einem Pressraum ein Rotor (12) mit Ober- und Unterstempeln (18, 20), Matrizenscheibe (14), Kurvenelemente für die Stempel (18, 20), mindestens eine Druckstation und ein Füllsystem für das pulverförmige Material angeordnet sind, **dadurch gekennzeichnet, dass** oberhalb der Matrizenscheibe und oberhalb des Teilkreises der Matrizen (16) ein NIR- oder LIF-Sensor (36) zur Prüfung einer Tablette, die sich noch innerhalb der Matrize (16) befindet, stationär angeordnet ist, wobei der NIR- oder LIF-Sensor (36) mit einem Maschinenrechner (42) und/oder einem Zusatzrechner (40) verbunden ist und einer Welle des Rotors (12) ein Positionsgeber (46) zur Ermittelung von Matrizenpositionen relativ zum NIR- oder LIF-Sensor (36), zugeordnet ist, und der Positionsgeber ebenfalls mit dem Maschinenrechner (42) verbunden ist für die Zuordnung der Sensorsignale zu Positionssignalen des Positionsgebers (46).

8. Rundläufertablettenpresse nach Anspruch 7, **dadurch gekennzeichnet, dass** an einem Befülltrichter (30) und/oder einem Füllsystem (32) und/oder oberhalb der Matrizenscheibe (14) nahe dem Befüllsystem ein weiterer NIR- oder LIF-Sensor (50, 52, 54 und 56) angeordnet ist, der mit dem Maschinenrechner (40, 42) verbunden ist.

## Claims

1. A method for quality surveillance in manufacturing tablets in a rotary tablet press which, in a compression chamber, has a rotor (12) with upper and lower rams (18, 20), a die-plate (14), a cam system for the rams (18, 20), at least one compressing station, and a charging system for the powdered material requiring compression wherein the tablets are checked for chemical and/or mechanical properties, **characterized in that** after the upper rams (18) have left the dies (16) at least some chemical and/or mechanical data of the tablets is obtained by means of a NIR or LIF sensor (36) in the compression chamber, wherein the NIR or LIF sensor (36) is stationary disposed above the die-plate (14) and above the graduated circle of the dies (16), and a tablet (38) to be checked is still within the die (16), and wherein the data are obtained after a measuring procedure has been initiated by a machine computer in response to the die positions determined by a position generator (46) relative to the NIR or LIF sensor (36).

2. The method according to claim 1, **characterized in that** properties of the powdered material requiring compression are checked within the compression chamber by means of a further NIR or LIF sensor (50, 52, 54, 56).

3. The method according to claim 2, **characterized in that** the powdered material requiring compression is checked in a conduit leading to the charging system, within the charging system and/or in a die (16).

4. The method according to any one of claims 1 to 3, **characterized in that** mean values or standard deviations are calculated from the data of the checked properties.

5. The method according to any one of claims 1 to 4, **characterized in that** the tablet press is stopped if it exceeds limit values or limit ranges.

6. The method according to any one of claims 1 to 4, **characterized in that** if the determined data deviates from setpoints closed-loop systems for individual functions of the tablet press are triggered to optimize the production process.

7. A rotary tablet press wherein a compression chamber has disposed therein a rotor (12) with upper and lower rams (18, 20), a die-plate (14), cam members for the rams (18, 20), at least one compressing station, and a charging system for the powdered material, **characterized in that** a NIR or LIF sensor (36) for checking a tablet still being within the die (16) is stationary disposed above the die-plate (14) and above the graduated circle of the dies (16), wherein the NIR or LIF sensor (36) is connected to a machine computer (42) and/or a supplementary computer (40) and a shaft of the rotor (12) has associated therewith a position generator (46) for determining die positions relative to the NIR or LIF sensor (36), the position generator (46) being also connected to said machine computer (42) for an assignment of the sensor signals to position signals of the position generator (46).

8. A rotary tablet press according to claim 7, **characterized in that** a further NIR or LIF sensor (50, 52, 54, and 56) which is connected to the machine computer (40, 42) is disposed on a feed hopper (30) and/or a charging system (32) and/or above the die-plate (14) near the charging system.

## Revendications

1. Procédé pour le contrôle de qualité dans la fabrication de comprimés dans une presse rotative, qui a dans une chambre de compression un rotor (12) avec des poinçons supérieur et inférieur (18, 20), un support de matrice (14), des systèmes de came pour les poinçons (18, 20), au moins une station de compression et un système de remplissage pour le matériau en forme de poudre à comprimer, dans lequel les comprimés sont examinés par rapport à des propriétés chimiques et/ou mécaniques,
**caractérisé en ce que**
après les poinçons supérieurs (18) ont quitté les matrices (16), au moins quelques données chimiques et/ou mécaniques des comprimés sont saisies à l'aide d'un capteur NIR ou LIF (36) dans la chambre de compression, le capteur NIR ou LIF (36) étant disposé de façon stationnaire au dessus du support de matrice (14) et au-dessus du cercle gradué des matrices (16) et un comprimé qu'on veut examiner (38) étant encore dans l'intérieur de la matrice (16), les données étant saisies après qu'un processus de mesure a été déclenché par un ordinateur de machine, en fonction des positions de matrice par rapport au capteur NIR ou LIF (36) détectées par un transmetteur de position (46).

2. Procédé selon la revendication 1, **caractérisé en ce que** des propriétés du matériau en forme de poudre à comprimer sont examinées dans la chambre de compression à l'aide d'un autre capteur NIR ou LIF (50, 52, 54, 56).

3. Procédé selon la revendication 2, **caractérise en ce que** le matériau en forme de poudre à comprimer est examiné dans un conduit d'alimentation au système de remplissage, dans le système de remplissage et/ou dans une matrice (16).

4. Procédé selon l'une quelconque des revendications 1 à 3, **caractérisé en ce que** des valeurs moyennes ou des erreurs quadratiques moyennes sont calculées à partir des données des propriétés examinées.

5. Procédé selon l'une quelconque des revendications 1 à 4, **caractérisé en ce que** la presse de comprimés est arrêtée quand des limites ou des régions limite sont surmontées.

6. Procédé selon l'une quelconque des revendications 1 à 4, **caractérisé en ce que** dans le cas de déviations de la valeur de consigne des données saisies, des circuits de régulation pour des fonctions individuelles de la presse de comprimés sont commandés afin d'optimiser le processus de production.

7. Presse de comprimés rotative, dans laquelle un rotor (12) avec des poinçons supérieur et inférieur (18, 20), un support de matrice (14), des éléments de came pour les poinçons (18, 20), au moins une station de compression et un système de remplissage pour le matériau en forme de poudre à comprimer sont disposés dans une chambre de compression, **caractérisé en ce que** un capteur NIR ou LIF (36) est disposé de façon stationnaire au dessus du support de matrice et au-dessus du cercle gradué des matrices (16) afin d'examiner un comprimé qui se trouve encore dans l'intérieur de la matrice (16), le capteur NIR ou LIF (36) étant raccordé à un ordinateur de machine (42) et/ou un ordinateur additionnel (40), un transmetteur de position (46) pour la détection des positions de matrice par rapport au capteur NIR ou LIF étant associé à un arbre du rotor (12), le transmetteur de position étant aussi raccordé à l'ordinateur de machine (42) afin d'attribuer des signaux du capteur à des signaux de position du transmetteur de position (46).

8. Presse de comprimés rotative selon la revendication 7, **caractérisé en ce que** un autre capteur NIR ou LIF (50, 52; 54 et 56) est disposé chez un entonnoir de remplissage (30) et/ou chez un système de remplissage (32) et/ou au-dessus du support de came (14) près du système de remplissage, ledit autre capteur étant raccordé à l'ordinateur de machine (40, 42).
